(19) Europäisches Patentamt

European Patent Office

Office européen des brevets

(11) **EP 0 611 946 B1**

(12) **EUROPEAN PATENT SPECIFICATION**

(45) Date of publication and mention
of the grant of the patent:
**05.11.1997 Bulletin 1997/45**

(51) Int Cl.$^6$: **G01B 11/06**, G01B 9/02

(21) Application number: **94301190.8**

(22) Date of filing: **18.02.1994**

(54) **Minute step height measuring method and apparatus therefor**

Verfahren und Gerät zum Messen einer geringen Schritthöhe

Méthode et appareil pour mesurer un gradin en hauteur infinie

(84) Designated Contracting States:
**DE FR GB**

(30) Priority: **19.02.1993 JP 30158/93**

(43) Date of publication of application:
**24.08.1994 Bulletin 1994/34**

(73) Proprietor: **NIKON CORPORATION
Tokyo (JP)**

(72) Inventors:
• **Oki, Hiroshi, Azamino Riiberu B-204
Yokohama-shi, Kanagawa-ken (JP)**
• **Iwasaki, Yutaka, Kosumo Yokohama Kozukue
Yokohama-shi, Kanagawa-ken (JP)**
• **Iwasaki, Jun, Daisan Ohfuna Pakutaun G-710
Yokohama-shi, Kanagawa-ken (JP)**

(74) Representative: **Burke, Steven David et al
R.G.C. Jenkins & Co.
26 Caxton Street
London SW1H 0RJ (GB)**

(56) References cited:
**EP-A- 0 094 835**

• **OPTICS COMMUNICATIONS, vol.85, 1991,
NORTH-HOLLAND pages 177 - 182, XP220039
HIROSHI OOKI E.A. 'A NOVEL TYPE OF LASER
SCANNING MICROSCOPE: THEORETICAL
CONSIDERATIONS'**
• **APPLIED PHYSICS LETTERS, vol.45, no.8,
October 1984, NEW YORK US pages 846 - 848
R.L. JUNGERMAN E.A. 'PHASE SENSITIVE
SCANNING OPTICAL MICROSCOPE'**
• **PATENT ABSTRACTS OF JAPAN vol. 16, no. 100
(P-1323) 11 March 1992 & JP-A-03 278 009
(NIKON CORP.) 9 December 1991**

**Description**

BACKGROUND OF THE INVENTION

Field of the Invention

This invention relates to a method of measuring minute step heights on an object and an apparatus with a confocal laser scanning differential interference contrast microscope therefor.

Related Background Art

Generally, there have been utilized scan-type electron microscopes or probe-type microscopes in order to quantifiably measure minute step heights formed on an object in nanometer order. Also, atomic force microscopes (AFM) have been started to be utilized recently.

However, the scan-type electron microscopes and atomic force microscopes are expensive and the handling of those is difficult. In the probe-type microscopes, a probe is brought into contact with the surface of the object for the measurement, so the object is liable to be damaged and the probe is often broken, necessitating replacement of the probe often. Consequently, it is also disadvantageous from the viewpoint of the cost.

Therefore, the inventors of the present invention utilized a phase contrast microscope and a differential interference contrast microscope and tried to obtain the amount of step heights from image outputs of these microscopes quantifiably. This method is not impossible in principle but it is very difficult to establish a formula for the method from the wave optical image formation theory. Also, the principle for measuring step heights by utilizing the differential interference contrast microscope is disclosed at page 70 in O plus E (a Japanese publication) published in October, 1992, wherein a signal corresponding to the slope of the step structure is obtained when the width (not height) of the step structure on the object (phase object) is sufficiently larger than a light spot. That is, the method is applicable to the object having the step heights with gentle slopes, in which the measurement of the step heights can be performed without taking the effect of diffraction into consideration. Also, the effect of diffraction of the optical system is not taken into consideration. Accordingly, the resolution to an object having minute and narrow step heights is considerably reduced. Optic Communications, 85 (1991), P177 discloses a double mode channel waveguide in an interference contrast microscope.

SUMMARY OF THE INVENTION

It would be desirable to provide a method and an apparatus capable of measuring on an object step heights having a narrower width than a light spot with high resolution, without being in contact with the object.

The present invention is set out in the appended claims.

The inventors of the present invention found that minute step heights cn an object (a phase object) can be measured by image signals of a microscope even though the width of the minute step heights is smaller than that of a light spot. Thereby, it is possible to obtain a measuring apparatus which is capable of measuring minute step heights without being in contact with the object and inexpensive and easy to handle as compared with scan-type electron microscopes and atomic force microscopes. Further, it was found that if a confocal laser scanning differential interference contrast microscope provided with a waveguide in the detecting system is utilized, by utilizing two detecting devices, a step height can be calculated from output signals from the detecting devices without carrying out measurement in various points. Also, in the present invention, its quantification was endorsed definitely by the wave optical image formation theory and so it is possible to measure step heights from image signals quantifiably.

For measuring a minute step height on an object to be examined, an embodiment of the present invention basically comprises a laser source, an illuminating optical system for focusing a light beam from the laser source and forming a light spot on the object, an optical system for focusing the light beam from the object on a detecting surface, and detecting means for detecting the light beam focused on the detecting surface.

The detecting means has a substrate formed with a channel waveguide. The channel waveguide has a double mode channel waveguide region having an entrance end on the detecting surface and at least two branch channel waveguide regions branched from said double mode channel waveguide region. The detecting means further has respective detecting elements for detecting lights propagated through the branch channel waveguides, adding means for adding signals from the detecting elements, subtracting means for obtaining the difference of signals from the detecting elements and calculating means for outputting data of the step height on the object on the basis of the outputs of the adding and subtracting means.

In the above structure, when the fully coupled length of two modes of the double mode region of the channel waveguide is Lc, it is effective that the length L of the double mode channel waveguide is

$$L = Lc \, (2m + 1) \, / \, 2. \qquad (m = 0, \, 1, \, 2, \, ....)$$

The minute step height measuring apparatus is preferably provided with scanning means for relatively shifting the light spot with respect to the object to be examined. Also, based on the output information $S(s_0)$ of the adding means and the output information $W(s_0)$ of the subtracting means, it is effective to obtain the minute step height $\phi_0$ by the following equation:

$$\phi_0 = C_A \cdot S(s_0)/W(s_0),$$

wherein $C_A$ is the constant which depends on the apparatus.

The method of measuring the minute step height on the object to be examined comprises the steps of forming the light spot on the object by focusing light from the laser source, focusing the light from the object on the detecting surface and detecting the focused light on the detecting surface.

Further, the detecting step comprises the steps of detecting the respective intensity of lights from the branch channel waveguides propagated through the double mode channel waveguide from the entrance end surface on the detecting surface, obtaining the difference and the sum of the respective intensity signals and calculating a signal for the minute step height on the object based on the difference signal and the sum signal.

The minute step height measuring method may further comprise the step of relatively shifting the light spot with respect to the object.

Although the detecting principle in a confocal laser scanning mode interference contrast microscope using a waveguide is already disclosed by the inventors (Optics communications, 85 (1991), P177), a quantitative relationship between the minute step height on the object and the image signal will be described hereinafter. For simplicity, the description will be restricted to one-dimensional case, but two-dimentionalization is easy. Of course, the discovery of the quantitative relationship is the chief meaning of the present invention. If the amplitude distribution function of the object is $o(x)$, the amplitude distribution function of the laser spot for illuminating the object (even function) is $u(x)$ and the amplitude distribution function of the point image in the image formation optical system from the object to the entrance end surface of the channel waveguide is $K(x)$, the amplitude distribution function of the laser spot at the entrance end surface of the channel waveguide $h(x, x_0)$ is given by

$$h(x, x_0) = \int o(s)u(s-x_0)K(s-x_0-x)ds, \tag{1}$$

wherein $s$ and $x$ are coordinates on the object and the entrance end surface of the channel waveguide respectively and $x_0$ is the distance between the origin of the coordinates on the object and the center of the laser spot. That is, $x_0$ is varied according to scanning. If the field distribution functions of the zeroth and first modes of the double mode channel waveguide are $f_0(x)$ and $f_1(x)$ respectively, the coupling coefficients of the zeroth and first modes $\eta_0$, $\eta_1$ are

$$\eta_0(x_0) = \int h(x, x_0)f_0{}^*(x)dx \tag{2}$$

and

$$\eta_1(x_0) = \int h(x, x_0)f_1{}^*(x)dx. \tag{3}$$

Here, $f_0(x)$ is an even function and $f_1(x)$ is an odd function.

Now, the light intensity distribution $I(x_0, t)$ in the double mode channel waveguide is expressed as

$$I(x_0, t) = \left| \eta_0\,(x_0)\,f_0 t + \exp\,[i\theta]\,\eta_1\,(x_0)\,f_1\,(t) \right|^2. \tag{4}$$

Here, $t$ is a coordinate system taken in the double mode waveguide so as to be parallel to the X-coordinate. $\theta$ is a phase difference between the zeroth and first modes. Note that $\theta = \pi/2 + m\pi$ is optimum when observing a phase object, which is already disclosed in the foregoing reference (Optical Communication, 85 (1991), 177).

Let it be assumed that the angle of inclination is $\theta$ and $\sin\theta = \alpha$. If the amplitude distribution of the laser spot when the inclination is O is u(x) and the field distribution of each eigen mode of the double mode waveguide is fe(x) and fo (x) with respect to the even and odd modes, respectively, u(x) and fe(x) are eve functions and fo(x) is an odd function. With $k = 2\pi/\lambda$ ($\lambda$: wavelength), the amplitude distribution of the laser spot $u\alpha(x)$ when there is an inclination is expressed as $u\alpha(x) \simeq u(x)\exp(ik\alpha x)$

$$= u(x)[\cos(k\alpha x) + i\sin(k\alpha x)]. \qquad (a)$$

Here, the coupling efficiency $\eta e$ of the even mode is

$$\eta e = \frac{\int u(x)\cos(k\alpha x)\, fe^*(x)\, dx}{\sqrt{\int |u(x)|^2 dx \int |fe(x)|^2 dx}} \qquad (b)$$

while the coupling efficiency $\eta_o$ of the odd mode is

$$\eta o = \frac{i\int u(x)\sin(k\alpha x)\, fo^*(x)\, dx}{\sqrt{\int |u(x)|^2 dx \int |fo(x)|^2 dx}}. \qquad (c)$$

if the integration range is suitably chosen and $|k\alpha x| \ll 2\pi$ within this range,

$$\cos(k\alpha x) \simeq 1, \quad \sin(k\alpha x) \simeq k\alpha x$$

and hence, from the fact that u(x), fo(x) and fe(x) are predetermined functions, it can be seen that

$$\eta e \simeq \text{constant}, \quad \eta o \propto i\alpha. \qquad (d)$$

If $C_1$ and $C_2$ are real constants and $\phi$ is the phase difference between the even and odd modes at the point of branch-off, the variation in the intensity of light by the interference between the even mode and the odd mode is

$$I \propto |\eta e \pm i\eta o \exp\{i\phi\}|^2 = |C_1 \pm i\alpha C_2 \exp\{i\phi\}|^2. \qquad (e)$$

Consequently, if $\exp\{i\phi\}$ is selected to $\exp\{i\phi\} = \pm i$, the equation (e) substantially becomes

$$I = C_1^2 \pm 2\alpha C_1 C_2 \qquad (f)$$

and a variation in the intensity proportional to $\alpha$ is obtained, and a so-called differential image can be obtained. Accordingly, to obtain such a differential image, it is necessary that at the point of branch-off between the double mode and the single mode, a phase difference an odd number times as great as 90° be brought about between the two modes. For this reason, if the well-known fully coupled length of the two modes (the length for which the phase difference between the even and odd modes is 180°) is Lc, it is preferable that the length L of the double mode region be

$$L = Lc\,(2m + 1)/2. \qquad (m = 0, 1, 2, \ldots). \qquad (g)$$

Note that the expression (a) takes the inclination of the object into consideration and thus, supposes a phase object. The length of the double mode channel waveguide determined in the equation (g) is not limited to the length determined mechanically. That is, when the substrate with the double mode channel waveguide has electro-optical effect, the fully coupled length Lc can be varied by applying a voltage to electrodes disposed on the double mode region of the channel waveguide. Therefore, even when the mechanical length of the double mode region is a certain fixed length, the equation (g) can be satisfied by the regulation of the voltage. When the length L of the double mode region is

$$L = mLc\ (m = 0, 1, 2, \ldots), \qquad (h)$$

it is possible to detect the variation in the intensity of the light of the object. However, in order to measure the step heights, the equation (g) needs to be satisfied.

Next, the object is assumed to be a minute phase object as follows:

$$o(x) = a \cdot \exp[i\phi(x)] \simeq a\{1 + i\phi(x)\}. \tag{5}$$

Here, $a^2$ is the reflectivity of the object and $\phi(x)$ is the phase distribution of the object due to the uneven surface (unit: radian).

From the equations (1) to (5), $I(x_0, t)$ is obtained by

$$I(x_0, t)$$

$$= \{aC_0 f_0(t)\}^2 - 2a^2 C_0 f_0(t) f_1(t)$$

$$\cdot \iint \phi(s) u(s-x_0) K(s-x_0-x) f_1(x) ds dx. \tag{6}$$

Here, the coefficient $C_0$ is

$$C_0 = \iint u(s-x_0) K(s-x_0-x) f_0(x) ds dx. \tag{7}$$

When obtaining the equation (6), quadratic or more terms as to $\phi$ are neglected. The difference signal output $S(x_0)$ is given by

$$S(x_0) = \int_{-\infty}^{0} I(x_0, t)dt - \int_{0}^{\infty} I(x_0, t)dt. \tag{8}$$

The fact that $f_0(x)$, $f_1(x)$ are the even and odd functions respectively is taken into consideration and then, from the equations (6) and (8), $S(x_0)$ becomes

$$S(x_0) = 4a^2 C_0 C_t \int_{-\infty}^{0} \phi(s) u(s-x_0) G(s-x_0) ds. \tag{9}$$

Here, $C_t$ and $G(x)$ are

$$C_t = \int_{0}^{\infty} f_0(t) f_1(t) dt \tag{10}$$

and

$$G(x) = \int_{-\infty}^{\infty} K(x-s) f_1(s) ds. \tag{11}$$

Thereby, the equation (9) becomes

$$S(x_0) = 4a^2 C_0 C_t \int_{-\infty}^{\infty} \phi(s) PSF(s-x_0) ds. \tag{12}$$

Of course, PSF(x) is

$$PSF(x) = u(x)G(x). \tag{13}$$

On the other hand, the sum signal output $W(x_0)$ is given by

$$W(x_0) = \int_{-\infty}^{\infty} I(x_0, t)dt. \tag{14}$$

From the equation (6), $W(x_0)$ becomes

$$W(x_0) = a^2 C_0{}^2 C_w. \tag{15}$$

Here,

$$C_w = \int_{-\infty}^{\infty} \{f_0(t)\}^2 dt. \tag{16}$$

Now, the minute step height on the object $\phi(s)$ is defined as follows:

$$\phi(s) = 0 \qquad s < s_0$$

$$\phi_0 \qquad s \geq s_0 \tag{17}$$

The equation (17) is substituted for the equation (12) to be

$$S(x_0) = 4a^2 \phi_0 C_0 C_t \int_{s0}^{\infty} PSF(s-x_0)ds. \tag{18}$$

Thereby,

$$S(s_0) = 4a^2 \phi_0 C_0 C_t \int_{0}^{\infty} PSF(s)ds. \tag{19}$$

On the other hand, the sum signal output does not depend on $\phi$, therefore,

$$W(s) = a^2 C_0{}^2 C_w. \tag{20}$$

Then, from the equations (19) and (20), $\phi_0$ is obtained by

$$\phi_0 = S(s_0)C_w C_0 / \{4W(s_0)C_t \int_{0}^{\infty} PSF(s)ds\}. \tag{21}$$

That is, $\phi_0$ can be simply expressed as

$$\phi_0 = C_p \cdot S(s_0)/W(s_0) \tag{22}$$

wherein $C_P = C_w C_0/\{4C_t \int_{0}^{\infty} PSF(s)ds\}$.

Thus, $\phi_0$ can be obtained simply by multiplying a ratio of the difference signal output $S(s_0)$ to the sum signal output

W(s$_0$) by the constant C$_P$ determined by the apparatus.

BRIEF DESCRIPTION OF THE DRAWINGS

Figure 1 is a schematic diagram of a minute step height measuring apparatus according to an embodiment of the present invention;
Figure 2 is a sectional view of a standard sample to be used in the apparatus; and
Figures 3A and 3B are examples of difference signal outputs of the apparatus.

DETAILED DESCRIPTION OF THE PREFERRED EMBODIMENTS

Embodiments of the present invention will be described concretely with reference to drawings now. Embodiments of present invention are structured to have a confocal laser scanning differential interference contrast microscope and memory means and calculating means both annexed to the microscope. The memory means has a constant of the apparatus. The calculating means is for obtaining the step height of an object by the apparatus constant and difference and sum signal outputs from the microscope. Separate apparatuses for the respective memory and calculating means may be combined to be a single step height measuring machine but practically it is preferable to make one computer have both functions.

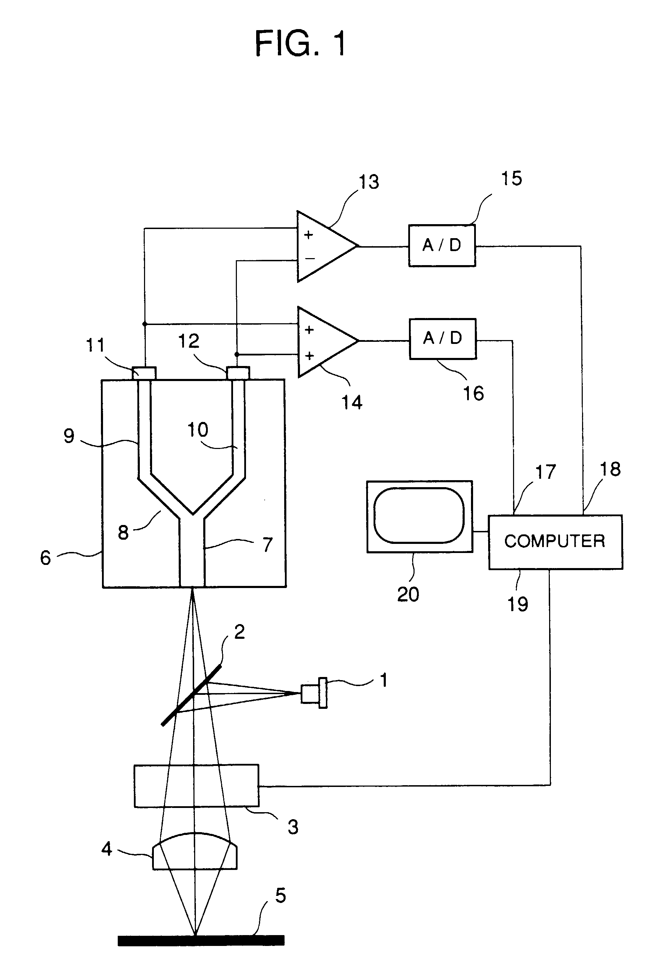

Figure 1 is a schematic diagram showing a step height measuring apparatus of an embodiment of the present invention. Light emitted from a laser source 1 is reflected by a half mirror 2 and focused on the surface of an object 5 via X-Y two-dimensional scanning means 3 and an objective lens 4. The light reflected by the surface of the object and transmitted again through the objective lens 4, the X-Y two-dimensional scanning means 3 and the half mirror 2 is incident on the entrance end surface of a double mode channel waveguide 7 formed on the substrate 6. The length of the double mode channel waveguide 7 is chosen to be optimum for observing phase objects, so that the light propagated through the double mode channel waveguide 7 is distributed at a branch-off region 8 into two channel waveguides 9 and 10 in the optimum distribution ratio for reflecting the step heights on the surface of the object 5 strongly.

The respective lights propagated through the channel waveguides 9 and 10 are subjected to the intensity measurement by photodetectors 11 and 12 provided at the exit ends of the channel waveguides 9 and 10. Signals output from the photodetectors 11 and 12 are simultaneously supplied to a subtracting circuit 13 and an adding circuit 14. The signals output from the subtracting and adding circuits 13 and 14 are respectively sent to A/D converters 15 and 16 to be quantized. The quantized difference and sum signals are input in a computer 19 from respective input ports 17 and 18. The computer 19 stores in an internal memory unit an apparatus constant which was preliminarily and experimentally obtained for the minute step height measuring machine in this embodiment.

The computer 19 calculates a step height on the surface of the object 5 within the laser light spot from the apparatus constant and the quantized difference and sum signals based on the equation (21). The result of the calculation is displayed on a monitor 20 as a cross section of the object 5 together with a scale indicating the absolute value of the step height based on the positional information of the laser light spot on the surface of the object from the X-Y two-dimentional scanning means 3.

The apparatus constant in this embodiment was determined as follows. First, a standard sample was formed on an Si substrate by means of a reactive dry etching technique. A step height of the standard sample was measured by an interferometer. The result as a specimen was measured by the step height measuring machine of this invention to obtain difference and sum signals. An apparatus constant was calculated from these difference and sum signals by using the equation (21). A plurality of standard samples having various step heights were formed to reduce the error and apparatus constants obtained from the respective standard samples were averaged to determine the apparatus constant for the step height measuring machine in this embodiment.

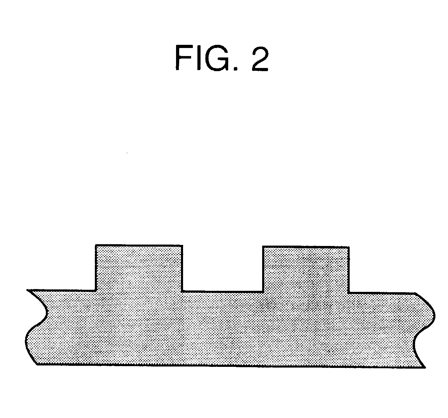

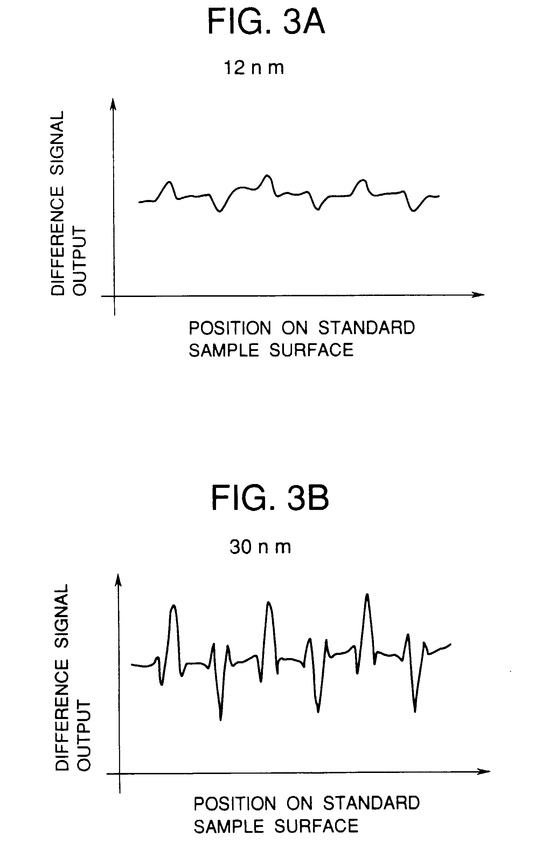

Figure 2 is a sectional view of a standard sample. Figures 3A and 3B show portions of difference signal outputs obtained from standard samples with step heights of 12 nm and step heights of 30 nm respectively relative to the surfaces of the respective standard samples. Thus, the difference signal outputs are varied in accordance with the largeness of the step heights. If not the absolute values of the step heights but only the relative configuration of the step heights is required, the procedure of obtaining the apparatus constant is omitted. Although the apparatus constant is determined prior to the measurement in this embodiment, only the relative configuration of the step heights may be obtained at the time of the measurement and stored in an external memory unit and thereafter, the absolute configuration of the step heights may be obtained by calculation with the obtained apparatus constant.

In this embodiment, the measurement of the step heights is possible only in one axial direction of the X-Y plane on the surface of the object. However, if the present invention is applied to a confocal laser scanning differential interference contrast microscope proposed in Japanese Patent Application Nos. 3-290293 and 4-159722 wherein a differential image can be obtained in two axial directions, the configuration of the surface of the object can be reproduced completely.

According to the present invention, as above, it is possible to measure the step heights of the surface of the object without damaging the object and without being in contact with the object. Also, therein no need to provide a plurality of detecting devices as conventional and the apparatus can be provided with only one detecting device consisting of a substrate with a channel waveguide, making it possible to form the apparatus at low cost. Further, its quantification is endorsed by the wave optical image formation theory, so that it is possible to quantifiably measure the minute step heights on the object with high resolution and with ease even though the width of the minute step heights is fairly smaller than that of the laser light spot.

**Claims**

1. Apparatus for measuring a minute step height on an object (5) to be examined, comprising:

   a source (1) of coherent radiation for irradiating said object (5) with a light spot; and
   detecting means for detecting the radiation from the irradiated object (5), the detecting means comprising a double-mode channel waveguide (7) for receiving the radiation, two channel waveguide regions (9, 10) branched from said double mode channel waveguide (7) and two respective detecting elements (11, 12) for detecting radiation propagated in said channel waveguide regions (9, 10) and for generating two respective detection signals,

   characterised in that said apparatus further comprises calculating means (13, 14, 19) for outputting data of a minute step height on said object (5) based on a ratio of the sum of and the difference between said signals when said light spot is at the same position on said object (5).

2. An apparatus according to claim 1, where in said radiation source (1) is a laser source (1),

   wherein said detecting means has a substrate formed with said channel waveguide (7) which is constituted of a double mode channel waveguide region having an entrance end on a detecting surface and said two branch channel waveguide regions branched from said double mode channel waveguide,
   and wherein said apparatus further comprises:
   an illuminating optical system (2, 4) for focusing a light beam from said laser source (1) and forming said light spot on said object (5); and
   a focusing optical system (4) for condensing the light beam from said object (5) on said detecting surface.

3. An apparatus according to claim 2, wherein when the fully coupled length of both modes in said double mode channel waveguide region is Lc, the length of said double mode channel waveguide region L is given by

$$L = Lc \, (2m + 1) \, / \, 2. \qquad (m = 0, 1, 2 \, ....)$$

4. An apparatus according to claim 1, 2 or 3, further comprising scanning means (3) for relatively shifting the light spot with respect to the object (5).

5. An apparatus according to any preceding claim, wherein said calculating means obtains the minute step height $\phi_0$ on said object based on the sum $S(s_0)$ of said signals and the difference $W(s_0)$ of said signals by the following equation:

$$\phi_0 = C_P \cdot S(s_0)/W(s_0),$$

   wherein $C_P$ is an eigen constant of said apparatus.

6. A method of measuring a minute step height on an object (5) to be examined, comprising the steps of:

   forming a light spot on said object (5) by focusing a light beam from a laser source (1);
   focusing the light beam from said object (5) on a detecting surface; and
   detecting the light beam focused on said detecting surface,

said detecting step comprising the step of:
detecting the intensities of light which are propagated from an entrance end of said detecting surface through a double mode channel waveguide region and at least two branch channel waveguide regions (9, 10) branched from said double mode channel waveguide region,

characterised by the step of calculating a value representation of said minute step height on the object based on a ratio of the sum of and the difference between said intensities when said light spot is at the same position on said object (5).

7. A method according to claim 6, wherein when the fully coupled length of both modes in said double mode channel waveguide region is Lc, the length of said double mode channel waveguide region L is given by

$$L = Lc \, (2m + 1) \, / \, 2. \qquad (m = 0, \, 1, \, 2 \, ....)$$

8. A method according to claim 6 or 7, further comprising the step of relatively shifting said light spot with respect to said object (5).

9. A method according to any of claims 6, 7 or 8 wherein said calculating step obtains the minute step height $\phi_0$ on said object based on the difference data $S(s_0)$ and the sum data $W(s_0)$ by the following equation:

$$\phi_0 = C_P \cdot S(s_0)/W(s_0),$$

wherein $C_P$ is an eigen constant of an apparatus for performing said method.

**Patentansprüche**

1. Vorrichtung zum Messen einer kleinen Stufenhöhe eines zu untersuchenden Objekts (5), umfassend:

- eine Quelle (1) kohärenter Strahlung zum Bestrahlen des Objekts (5) mit einem Lichtfleck; und
- eine Detektiereinrichtung zum Detektieren der Strahlung von dem bestrahlten Objekt (5), umfassend einen Doppelmoden-Kanalwellenleiter (7) zum Empfangen der Strahlung, zwei Kanalwellenleiterzonen (9, 10), die von dem Doppelmoden-Kanalwellenleiter (7) abgezweigt sind, und zwei zugehörige Detektierelemente (11, 12) zum Erfassen von Strahlung, die sich in den Kanalwellenleiterzonen (9, 10) ausbreitet, und zum Generieren zweier entsprechender Nachweissignale,

dadurch gekennzeichnet, daß
die Vorrichtung außerdem eine Berechnungseinrichtung (13, 14, 19) aufweist zum Ausgeben von Daten über eine kleine Stufenhöhe an dem Objekt (5), basierend auf einem Verhältnis von Summe und Differenz zwischen den Signalen, wenn der Lichtfleck sich an der gleichen Stelle an dem Objekt (5) befindet.

2. Vorrichtung nach Anspruch 1, bei der
die Strahlungsquelle (1) eine Laserquelle (1) ist,

wobei die Detektiereinrichtung ein Substrat, welches mit dem Kanalwellenleiter (7) ausgebildet ist, aufweist und letzterer gebildet ist durch eine Doppelmoden-Kanalwellenleiterzone mit einem Eintrittsende auf einer Detektierfläche, und den beiden Zweig-Kanalwellenleiterzonen, die von dem Doppelmoden-Kanalwellenleiter abzweigen,
und wobei die Vorrichtung außerdem aufweist:

- ein optisches Beleuchtungssystem (2, 4) zum Fokussieren eines von der Laserquelle (1) kommenden Lichtstrahls und zum Bilden des Lichtflecks auf dem Objekt (5); und
- eine Fokussieroptik (4) zum Sammeln des Lichtstrahls von dem Objekt (5) auf der Detektierfläche.

3. Vorrichtung nach Anspruch 2, bei der,
wenn die vollständige Kopplungslänge beider Moden in der Doppelmoden-Kanalwellenleiterzone Lc beträgt, die Länge der Doppelmoden-Kanalwellenleiterzone L gegeben ist durch

$$L = Lc \ (2m + 1)/2. \ (m = 0, 1, 2, ...).$$

4. Vorrichtung nach Anspruch 1, 2 oder 3, umfassend
   eine Abtasteinrichtung (3) zum relativen Verschieben des Lichts in Bezug auf das Objekt (5).

5. Vorrichtung nach einem der vorhergehenden Ansprüche, bei der
   die Berechnungseinrichtung die kleine Stufenhöhe $\phi_0$ an dem Objekt basierend auf der Summe $S(s_0)$ der Signale und der Differenz $W(s_0)$ der Signale gemäß folgender Gleichung ermittelt:

$$\phi_0 = C_P \cdot S(s_0)/W(s_0),$$

   wobei $C_P$ die Eigenkonstante der Vorrichtung ist.

6. Verfahren zum Messen einer kleinen Stufenhöhe eines zu untersuchenden Objekts (5), umfassend die Schritte:

   - Erzeugen eines Lichtflecks auf dem Objekt (5) durch Fokussieren eines von einer Laserquelle (1) stammenden Lichtstrahls,
   - Fokussieren des Lichtstrahls, der von dem Objekt (5) kommt, auf eine Detektierfläche, und
   - Erfassen des auf die Detektierfläche fokussierten Lichtstrahls,

   wobei der Detektierschritt den Schritt aufweist:

   - Detektieren der Intensitäten des Lichts, die von einem Eintrittsende der Detektierfläche über eine Doppelmoden-Kanalwellenleiterzone und mindestens zwei Zweig-Kanalwellenleiterzonen (9, 10), die von der Doppelmoden-Kanalwellenleiterzone abzweigen, übertragen werden,

   gekennzeichnet durch
   den Schritt des Berechnens eines Werts, der repräsentativ ist für die kleine Stufenhöhe an dem Objekt, basierend auf einem Verhältnis von Summe und Differenz zwischen den Intensitäten, wenn der Lichtfleck sich an derselben Stelle des Objekts (5) befindet.

7. Verfahren nach Anspruch 6, bei dem,
   wenn die vollständige Kopplungslänge beider Moden in der Doppelmoden-Kanalwellenleiterzone Lc beträgt, die Länge der Doppelmoden-Kanalwellenleiterzone L gegeben ist durch

$$L = Lc \ (2m + 1)/2. \ (m = 0, 1, 2, ...).$$

8. Verfahren nach Anspruch 6 oder 7,
   gekennzeichnet durch
   den Schritt des relativen Verschiebens des Lichtflecks in Bezug auf das Objekt (5).

9. Verfahren nach einem der Ansprüche 6, 7 oder 8, bei dem
   der Berechnungsschritt die kleine Stufenhöhe $\phi_0$ an dem Objekt, basierend auf den Differenzdaten $S(s_0)$ und den Summendaten $W(s_0)$, gemäß folgender Gleichung ermittelt:

$$\phi_0 = C_P \cdot S(s_0)/W(s_0),$$

   wobei $C_P$ eine Eigenkonstante der Vorrichtung zur Durchführung des Verfahren ist.

**Revendications**

1. Dispositif pour mesurer une faible hauteur d'une partie étagée sur un objet (5) à examiner, comprenant :

   une source (1) de rayonnement cohérent pour irradier ledit objet (5) avec un spot de lumière ; et
   des moyens de détection pour détecter le rayonnement provenant de l'objet irradié (5), les moyens de détection comprenant un guide d'ondes de canal à deux modes (7) pour recevoir le rayonnement, deux régions (9, 10) du guide d'ondes de canal s'étendant en dérivation à partir dudit guide d'ondes de canal à deux modes (7) et deux éléments respectifs de détection (11, 12) pour détecter un rayonnement se propageant dans lesdites régions (9, 10) du guide d'ondes de canal et pour produire deux signaux respectifs de détection,

   caractérisé en ce que ledit dispositif comporte en outre des moyens de calcul (13, 14, 19) pour délivrer des données d'une faible hauteur de partie étagée sur ledit objet (5) sur la base d'un rapport de la somme et de la différence entre lesdits signaux lorsque ledit spot de lumière est dans la même position sur ledit objet (5).

2. Dispositif selon la revendication 1, dans lequel ladite source de rayonnement (1) est une source laser (1),

   dans lequel lesdits moyens de détection possèdent un substrat dans lequel est formé ledit guide d'ondes de canal (7) qui est constitué par une région de guide d'ondes de canal à deux modes comportant une extrémité d'entrée sur une surface de détection et lesdites deux régions de guide d'ondes de canal de dérivation, qui s'étendent en dérivation à partir dudit guide d'ondes de canal à deux modes, et
   dans lequel ledit dispositif comporte en outre :
   un système optique d'éclairement (2, 4) pour focaliser un faisceau de lumière délivré par ladite source laser (1) et formant ledit spot de lumière sur ledit objet (5) ; et
   un système optique de focalisation (4) pour condenser le faisceau de lumière provenant dudit objet (5) sur ladite surface de détection.

3. Dispositif selon la revendication 2, dans lequel si la longueur entièrement couplée des deux modes de ladite région de guide d'ondes de canal à deux modes est Lc, la longueur de ladite région de guide d'ondes de canal à deux modes L est fournie par

$$L = Lc \, (2m + 1) \, / \, 2. \; (m = 0, 1, 2, ....)$$

4. Dispositif selon la revendication 1, 2 ou 3, comprenant en outre des moyens de balayage (3) pour décaler de façon relative la source de lumière par rapport à l'objet (5).

5. Dispositif selon l'une quelconque des revendications précédentes, dans lequel lesdits moyens de calcul fournissent la faible hauteur $\phi_0$ de partie étagée sur ledit objet sur la base de la somme $S(s_0)$ desdits signaux et de la différence $W(s_0)$ desdits signaux conformément à la relation suivante :

$$\phi_0 = C_p . S(s_0)/W(s_0)$$

   $C_p$ étant une constante propre dudit dispositif.

6. Dispositif pour mesurer une faible hauteur de partie étagée sur un objet (5) à examiner, comprenant les étapes consistant à :

   former un spot de lumière sur ledit objet (5) en focalisant un faisceau de lumière délivré par une source laser (1) ;
   focaliser le faisceau de lumière provenant dudit objet (5) sur une surface de détection ; et
   détecter le faisceau de lumière focalisé sur ladite surface de détection,
   ladite étape de détection comprenant l'étape consistant à :
   détecter les intensités de lumière qui se propagent depuis une extrémité d'entrée de ladite surface de détection à travers une région de guide d'ondes de canal à deux modes et au moins deux régions de guide d'ondes de canal de dérivation (9, 10) qui s'étendent en dérivation à partir de ladite région de guide d'ondes de canal à deux modes,

caractérisé par l'étape consistant à calculer une valeur représentant ladite faible hauteur de partie étagée sur l'objet sur la base du rapport de la somme et de la différence entre lesdites intensités lorsque ledit spot de lumière est dans la même position sur ledit objet (5).

7. Procédé selon la revendication 6, selon lequel, si la longueur entièrement couplée des deux modes dans ladite région de guide d'ondes de canal à deux modes est Lc, la longueur de ladite région de guide d'ondes de canal à deux modes L est fournie par

$$L = Lc\ (2m + 1)\ /\ 2.\ (m = 0, 1, 2, ....)$$

8. Procédé selon la revendication 6 ou 7, comprenant en outre l'étape pour décaler de façon relative ledit spot de lumière par rapport audit objet (5).

9. Procédé selon l'une quelconque des revendications 6, 7 ou 8, selon lequel ladite étape de calcul fournit la faible hauteur $\phi_0$ de partie étagée sur ledit objet sur la base de la donnée de somme $S(s_0)$ et de la donnée de différence $W(s_0)$ conformément à la relation suivante :

$$\phi_0 = C_p.S(s_0)/W(s_0)$$

$C_p$ étant une constante propre d'un dispositif pour la mise en oeuvre dudit procédé.

# FIG. 1

FIG. 2

# FIG. 3A

12 n m

DIFFERENCE SIGNAL OUTPUT

POSITION ON STANDARD SAMPLE SURFACE

# FIG. 3B

30 n m

DIFFERENCE SIGNAL OUTPUT

POSITION ON STANDARD SAMPLE SURFACE